# EUROPEAN PATENT APPLICATION

(11) **EP 4 207 427 A1**
(43) Date of publication of application: **05.07.2023**
(21) Application number: 21886673.9
(22) Date of filing: 20.10.2021
(51) Int. Cl.: H01M 10/0585, H01M 4/139, H01M 4/80, H01M 4/62, H01M 50/46, H01M 10/052

(54) **ELECTRODE ASSEMBLY AND BATTERY CELL INCLUDING SAME**

(30) Priority: 30.10.2020 KR 20200143427; 15.10.2021 KR 20210137514
(71) Applicant: LG Energy Solution, Ltd., Seoul 07335 (KR)
(72) Inventor: KIM, Myeongsoo, Daejeon 34122 (KR); KIM, Jeonggil, Daejeon 34122 (KR); KIM, Taegon, Daejeon 34122 (KR)
(74) Representative: Goddar, Heinz J.
(86) International application number: PCT/KR2021/014652
(87) International publication number: WO 2022/092679

(57) **Abstract**

An electrode assembly according to one embodiment of the present disclosure includes a separator; a positive active material layer adhered to a first surface of the separator; and a negative electrode active material layer adhered to a second surface of the separator, wherein the positive electrode active material layer is formed of a first electrode composition in which a positive electrode active material, a binder, and a conductive material are dry-mixed, and wherein the negative electrode active material layer is formed of a second electrode composition in which a negative electrode active material, a binder, and a conductive material are dry-mixed.

## Description

### [TECHNICAL FIELD]

### Cross Citation with Related Application so

This application claims the benefit of Korean Patent Application No. 10-2020-0143427 filed on October 30, 2020 and Korean Patent Application No. 10-2021-0137514 filed on October 15, 2021 in the Korean Intellectual Property Office, the contents of which are incorporated herein by reference in their entirety.

The present disclosure relates to an electrode assembly and a battery cell including the same, and more particularly to an electrode assembly having improved productivity and resistance reduction effect and a battery cell including the same.

### [BACKGROUND]

Along with the technology development and increased demand for mobile devices, demand for secondary batteries as energy sources has been rapidly increasing. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density and discharge voltage is actively being conducted, a part of which are in the commercialization stage.

Conventional electrodes for secondary batteries are manufactured in a wet manner. However, when the electrode is manufactured in a wet manner, a heat treatment process at a high temperature is essentially required, and there is a risk that the metal oxide is damaged. Therefore, in recent years, there is a growing need to develop an electrode manufactured in a dry manner.

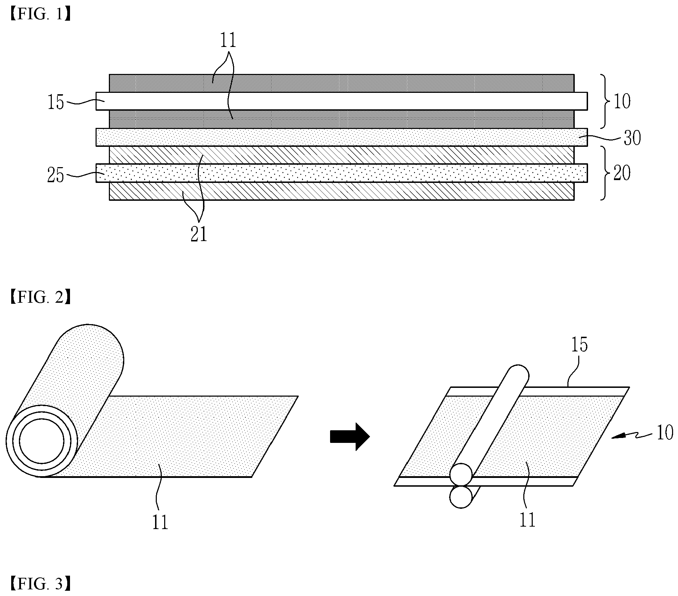

Fig. 1 is a diagram showing a conventional electrode assembly. Referring to Fig. 1, a conventional electrode assembly includes a positive electrode 10, a negative electrode 20, and a separator 30 interposed between the positive electrode 10 and the negative electrode 20. Here, the positive electrode 10 is configured such that a positive electrode active material layer 11 is located on a positive electrode current collector 15, and the negative electrode 20 is configured such that a negative active material layer 21 is located on a negative current collector 25.

Fig. 2 is a diagram showing a manufacturing process of an electrode included in the electrode assembly of Fig. 1. Referring to Fig. 2, the positive electrode active material layer 11 is formed in the form of a freestanding film by dry-mixing an electrode composition containing polytetrafluoroethylene (PTFE) as a binder. At this time, the positive electrode 10 is manufactured by roll pressing the positive electrode active material layer 11 to adhere onto the positive electrode current collector 15. This will be similarly explained in the case of the negative electrode 20.

However, when the positive electrode 10 and the negative electrode 20 are manufactured in a dry manner as shown in Fig. 2, due to the characteristics of polytetrafluoroethylene (PTFE), the electrode composition is produced by a bonding method that wraps the active material through fiberization by a shearing force, rather than a chemical bonding method by high temperature and pressure. In particular, in order to attach the electrode composition to the current collectors 15 and 25 in the form of a freestanding film, it was necessary to additionally apply or coat a separate binder between the freestanding film and the current collector.

As an example, conventionally, as polyvinylidene fluoride (PVDF), an acrylic binder, and the like are added to the electrode composition in addition to polytetrafluoroethylene (PTFE) to increase an adhesive force of the freestanding film, or the adhesive binder is coated onto the current collectors 15 and 25 in advance to enhance the adhesive force of the current collectors 15 and 25. At this time, the adhesive binder is coated onto the current collectors 15 and 25 using a slurry coating method such as general bar coating or gravure coating or a pattern coating method.

However, the adhesive layer formed between the freestanding film and the current collectors 15 and 25 prevents the contact between the freestanding film and the current collectors 15 and 25, which causes the problem of limiting electron movement. Thereby, conventionally, an attempt has been made to solve the above problems by mixing a conductive material having conductivity with the adhesive layer. However, the conventional method has still problems that the binder acts as a resistance in the high rate region and thus the discharge capacity is lowered, in that the binder is located between the freestanding film and the current collectors 15 and 25.

Fig. 3 is an exploded view of the electrode assembly of Fig. 1. Referring to Figs. 1 to 3, the conventional electrode assembly has a structure in which a separator 30 is interposed between the positive electrode 10 and the negative electrode 20 each manufactured as shown in Fig. 2. Thereby, in the conventional electrode assembly, the positive electrode 10 and the negative electrode 20 are limited to a film shape to secure a predetermined strength, and there is a problem that the productivity is reduced as the positive electrode 10 and the negative electrode 20 are separately manufactured.

Therefore, unlike the conventional case, there is a growing need to develop an electrode assembly that has improved resistance reduction effect and enhanced productivity as the binder content is minimized even while including electrodes manufactured by a dry method

### [DETAILED DESCRIPTION OF THE INVENTION]

### [Technical Problem]

It is an object of the present disclosure to provide an electrode assembly having improved productivity and resistance reduction effect and a battery cell including the same.

The objects of the present disclosure are not limited to the aforementioned objects, and other objects which are not described herein should be clearly understood by those skilled in the art from the following detailed description and the accompanying drawings.

### [DETAILED DESCRIPTION OF THE INVENTION]

### [Technical Problem]

According to one aspect of the present disclosure, there is provided an electrode assembly comprising: a separator; a positive active material layer adhered to a first surface of the separator; and a negative electrode active material layer adhered to a second surface of the separator, wherein the positive electrode active material layer is formed of a first electrode composition in which a positive electrode active material, a binder, and a conductive material are dry-mixed, and wherein the negative electrode active material layer is formed of a second electrode composition in which a negative electrode active material, a binder, and a conductive material are dry-mixed.

The positive active material layer may be configured such that a positive electrode current collector is stacked on a surface opposite to a surface in contact with the separator, and the negative active material layer may be configured such that a negative electrode current collector is stacked on a surface opposite to the surface in contact with the separator.

At least one of the positive electrode current collector and the negative electrode current collector may be formed of a planar sheet.

At least one of the positive electrode current collector and the negative electrode current collector may be formed of at least two or more linear sheets, and the linear sheets may be spaced apart from each other.

The linear sheets may have the same pattern as each other.

At least one of the positive electrode current collector and the negative electrode current collector may be formed of a fibrous sheet having a random arrangement.

A content of the binder contained in the first electrode composition may be 1% by weight or more and 5% by weight or less based on the total weight of the first electrode composition, and a content of the binder contained in the second electrode composition may be 1% by weight or more and 5% by weight or less based on the total weight of the second electrode composition.

The binder may include polytetrafluoroethylene (PTFE).

A content of the positive electrode active material contained in the first electrode composition may be 90% by weight or more and 98% by weight or less based on the total weight of the first electrode composition.

The positive electrode active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).

A content of the negative active material contained in the second electrode composition may be 90% by weight or more and 98% by weight or less based on the total weight of the second electrode composition.

The negative active material may include at least one of lithium metal, lithium alloy, petroleum coke, activated carbon, graphite, silicon, tin, and a metal oxide.

The positive active material layer and the negative active material layer may be produced from a freestanding film, respectively.

An adhesive layer is formed between the separator and the positive electrode active material layer, and between the separator and the negative electrode active material layer, respectively, and the adhesive layer may have a porous structure.

According to another aspect of the present disclosure, there is provided a battery cell comprising the above-mentioned electrode assembly.

The battery cell is formed by stacking at least two of the electrode assemblies, and the at least two electrode assemblies may be disposed such that the positive active material layers contained in each electrode assembly faces each other or the negative active material layer faces each other.

At least two of the electrode assemblies may be configured such that a positive electrode current collector is stacked between the respective positive electrode active material layers, and a negative electrode current collector is stacked between the respective negative electrode active material layers.

According to yet another aspect of the present disclosure, there is provided a method for manufacturing an electrode assembly, the method comprising the steps of: producing a positive electrode active material layer formed of a first electrode composition in which a positive electrode active material, a conductive material, and a binder are dry-mixed; producing a negative electrode active material layer formed of a second electrode composition in which a negative electrode active material, a conductive material, and a binder are dry-mixed; and attaching the positive electrode active material layer to a first surface of the separator, and attaching the negative active material layer to a second surface of the separator.

The positive electrode active material layer and the negative electrode active material layer may be produced from a freestanding film.

The method for manufacturing an electrode assembly may further include stacking the positive electrode current collector on a surface opposite to a surface in contact with the separator in the positive electrode active material layer, and stacking the negative electrode current collector on a surface opposite to a surface in contact with the separator in the negative electrode active material layer.

### [Advantageous Effects]

According to embodiments of the present disclosure, an electrode assembly in which a freestanding film produced by a dry method is adhered to a separator, and a battery cell including the same is provided, thereby capable of improving the productivity and resistance reduction effect.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a conventional electrode assembly;
Fig. 2 is a diagram showing a manufacturing process of an electrode included in the electrode assembly of Fig. 1.
Fig. 3 is an exploded view of the electrode assembly of Fig. 1;
Fig. 4 is a diagram showing an electrode assembly according to an embodiment of the present disclosure;
Fig. 5 is a diagram showing a current collector included in the electrode assembly of Fig. 4;
Fig. 6 is a flowchart showing a process of manufacturing the electrode assembly of Fig. 4;
Fig. 7 is a diagram showing a manufacturing process of the electrode assembly of Fig. 6;
Fig. 8 is an exploded view of the electrode assembly manufactured in the electrode assembly manufacturing process of Fig. 6.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Now, an electrode assembly according to an embodiment of the present disclosure will be described.

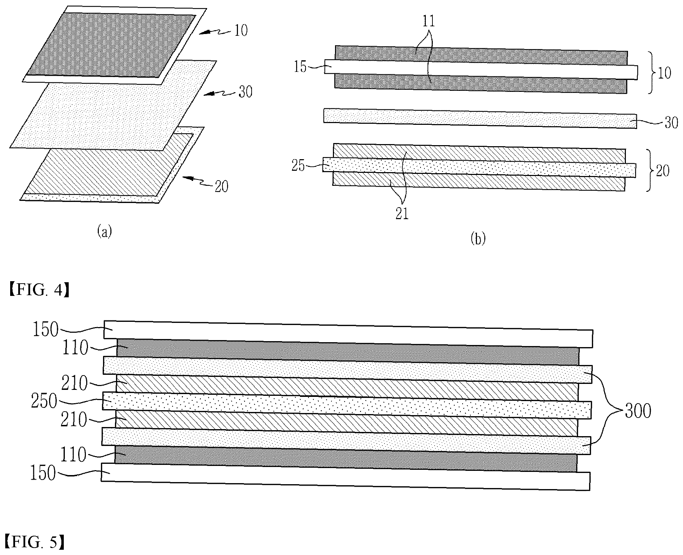

Fig. 4 is a diagram showing an electrode assembly according to an embodiment of the present disclosure.

Referring to Fig. 4, the electrode assembly according to an embodiment of the present disclosure includes a positive active material layer 110, a negative active material layer 210, and a separator 300. In the separator 300, the positive active material layer 110 is adhered to a first surface of the separator 300, and the negative active material layer 210 is adhered to a second surface of the separator 300.

In one example, in a state in which the positive active material layer 110 is stacked on the first surface of the separator 300 and the negative active material layer 210 is stacked on the second surface of the separator 300, the positive active material layer 110, the negative active material layer 210, and the separator 300 can be roll-pressed and adhered.

Here, the separator 300 can be used without particular limitation as long as it is usually used as a separator in a lithium secondary battery. In particular, it is preferable to have excellent moisture-containing ability of the electrolyte solution while being low in resistance to ion movement of the electrolyte, and have a surface adhesive force. As an example, the separator 300 is a porous polymer film, and may be a porous polymer film made of a polyolefin (PO)-based polymer such as ethylene homopolymer, propylene homopolymer, ethylene/butene copolymer, ethylene/hexene copolymer and an ethylene/methacrylate copolymer. Alternatively, an SRS (safety reinforced separator) can be used. Alternatively, as a conventional porous nonwoven fabric, a nonwoven fabric made of high-melting point glass fiber, polyethylene terephthalate fiber, or the like can be used.

Thereby, the separator 300 not only can separate the positive active material layer 110 and the negative active material layer 210 and perform the role of a lithium ion passage, but also can serve as a support for the positive active material layer 110 and the negative active material layer 210 adhering to each surface. Further, as the content of the binder included in the electrode assembly is minimized through the surface adhesive force of the separator 300, the resistance reduction effect can be improved.

In the electrode assembly according to another embodiment of the present disclosure, the separator 300 may include an adhesive layer (not shown) between the separator 300 and the positive electrode active material layer 110, and an adhesive layer (not shown) may be included between the separator 300 and the negative electrode active material layer 210.

Although the adhesive layer (not shown) is adhered to the separator 300, it can have a porous structure that does not disturb the movement of lithium ions through the separator 300. As an example, the adhesive layer (not shown) can be formed on the separator 300 by a vapor-induced phase separation method. In addition, the adhesive layer (not shown) can be used without limitation as long as it is a coating technique that does not block the pores formed in the separator 300, and methods such as binder pattern coating and coating of a mixed composition of an inorganic material and a binder can be applied.

Further, the adhesive layer can be formed of a coating slurry including an adhesive binder such as polyvinylidene fluoride (PVDF) or an acrylic binder. However, the material constituting the adhesive layer is not limited thereto, and any material having adhesive properties while being coated on the surface of the separator 300 can be used without limitation.

Thereby, the separator 300 can be improved in adhesive force to each of the positive active material layer 110 and the negative active material layer 210. Further, the role of the separator 300 as a passage for lithium ions is not limited even if the adhesive layer is formed. Further, through the surface adhesive force of the separator 300, the content of the binder contained in the adhesive layer formed on the separator 300 may be reduced as compared with the conventional case, and so the resistance reduction effect can be improved. In addition, the increase in resistance according to the adhesive layer may not be large, and the discharge capacity can also be improved in a high rate region.

Further, the adhesive force between the separator 300 and the positive active material layer 110 or the negative active material layer 210 may be 13 gf/15 mm or more and 100 gf/15 mm or less. More specifically, the adhesive force between the separator 300 and the positive active material layer 110 or the negative active material layer 210 may be 15 gf/15 mm or more and 95 gf/15 mm or less. As an example, the adhesive force between the separator 300 and the positive active material layer 110 or the negative active material layer 210 may be 20 gf/15 mm or more and 90 gf/15 mm or less.

Thereby, in the electrode assembly of the present embodiment, the adhesive force between the separator 300 and the positive active material layer 110 or the negative active material layer 210 can have an adhesive force in the above-mentioned range, and the separator 300 and the positive electrode active material layer 110 or the negative electrode active material layer 210 can be stably fixed.

Unlike the same, when the adhesive force between the separator 300 and the positive electrode active material layer 110 or the negative electrode active material layer 210 is too small outside the above-mentioned range, the separator 300 and the positive electrode active material layer 110 or the negative electrode active material layer 210 cannot be stably fixed. Further, when the adhesive force between the separator 300 and the positive electrode active material layer 110 or the negative electrode active material layer 210 is too large outside the above-mentioned range, there is a problem that the manufacturing cost increases or it is difficult to implement in the manufacturing process.

Further, the positive electrode active material layer 110 is formed of a first electrode composition in which the positive electrode active material is dry-mixed. The negative electrode active material layer 210 is formed of a second electrode composition in which the negative electrode active material is dry-mixed. As an example, each of the positive electrode active material layer 110 and the negative electrode active material layer 210 may be produced from a freestanding film. Thereby, before the positive electrode active material layer 110 and the negative electrode active material layer 210 are manufactured into an electrode assembly, each freestanding film can be stored in a roll form, and thus the productivity can be improved.

The positive electrode active material contained in the first electrode composition may include, for example, lithium cobalt oxide (LiCoO₂), lithium nickel oxide (LiNiO₂); lithium manganese oxide; lithium copper oxide (Li₂CuO₂); vanadium oxide; a Ni-site type lithium nickel oxide; lithium manganese composite oxide; lithium manganese composite oxide having a spinel structure; LiMn₂O₄ in which a part of Li in formula is substituted with an alkaline earth metal ion, a disulfide compound; Fe₂(MoO₄)₃, and the like. As an example, the positive electrode active material may include lithium manganese oxide (LMO).

Here, the positive electrode active material may be contained in an amount of 88% by weight to 99% by weight based on the total weight of the first electrode composition. More preferably, the positive electrode active material may be contained in an amount of 89% by weight to 98.5% by weight based on the total weight of the first electrode composition. As an example, the positive electrode active material may be contained in an amount of 90% by weight to 98% by weight based on the total weight of the first electrode composition.

The negative electrode active material contained in the second electrode composition can used a conventional negative active material for a lithium secondary battery in the art. As an example, a material such as lithium metal, lithium alloy, petroleum coke, activated carbon, graphite, silicon, tin, metal oxide or other carbons can be used.

Here, the negative active material may be contained in an amount of 88% by weight to 99% by weight based on the total weight of the second electrode composition. More preferably, the negative electrode active material may be contained in an amount of 89% by weight to 98.5% by weight based on the total weight of the second electrode composition. As an example, the negative electrode active material may be contained in an amount of 90% by weight to 98% by weight based on the total weight of the second electrode composition.

Further, the first electrode composition and the second electrode composition may include a binder, respectively. The binder performs the role of improving adhesion between active material particles and an adhesive force between the active material and the current collector. Specific examples thereof include polytetrafluoroethylene(PTFE), polyvinylidene fluoride (PVDF), vinylidenefluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylenepropylene-diene polymer (EPDM), sulfonated-EPDM, styrene butadiene rubber (SBR), fluororubber, or various copolymers thereof, and these may be used either singly or as a mixture of two or more.

In one example, the binder may include polytetrafluoroethylene (PTFE). Here, polytetrafluoroethylene (PTFE) has a characteristic that the fibers are pulled out from the particles as a shearing force is applied. That is, in one embodiment of the present disclosure, the first electrode composition and the second electrode composition each include polytetrafluoroethylene (PTFE) as a binder, and the first electrode composition and the second electrode composition are subjected to a strong shearing force and can be mixed by a physical mixing method according to the fiberization of polytetrafluoroethylene (PTFE).

Therefore, in one embodiment of the present disclosure, the first electrode composition and the second electrode composition may be dry-mixed without a separate solvent or additive, whereby it is very effective for bridging between active material particles or bridging between active material particles and a current collector, and also can prevent damage to the active material that occurs during the heat treatment process at high temperature according to the existing mixing method.

Further, the content of the binder contained in the first electrode composition is 1% by weight or more and 5 % by weight or less based on the total weight of the first electrode composition, and the content of the binder contained in the second electrode composition may be 1 % by weight or more and 5 % by weight or less based on the total weight of the second electrode composition. More preferably, the content of the binder contained in the first electrode composition is 2% by weight or more and 4% by weight or less based on the total weight of the first electrode composition, and the content of the binder contained in the second electrode composition may be 2% by weight or more and 4% by weight or less based on the total weight of the second electrode composition.

Thereby, the first electrode composition and the second electrode composition may have sufficient tensile strength and discharge capacity to form the positive electrode active material layer 110 and the negative electrode active material layer 210. Unlike the same, when the content of the binder is less than 1% by weight, the tensile strength of the positive electrode active material layer 110 and the negative electrode active material layer 210 may be reduced. Further, when the content of the binder is more than 5% by weight, the binder functions as a resistance in the positive electrode active material layer 110 and the negative electrode active material layer 210, and thus the discharge capacity may be decreased.

In addition, the first electrode composition and the second electrode composition may each include a conductive material. The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and these may be used either singly or as a mixture of two or more. Here, the conductive material may be contained in an amount of 1% by weight to 10% by weight based on the total weight of the electrode.

Next, the current collectors 150 and 250 included in the electrode assembly according to the present embodiment will be described in detail.

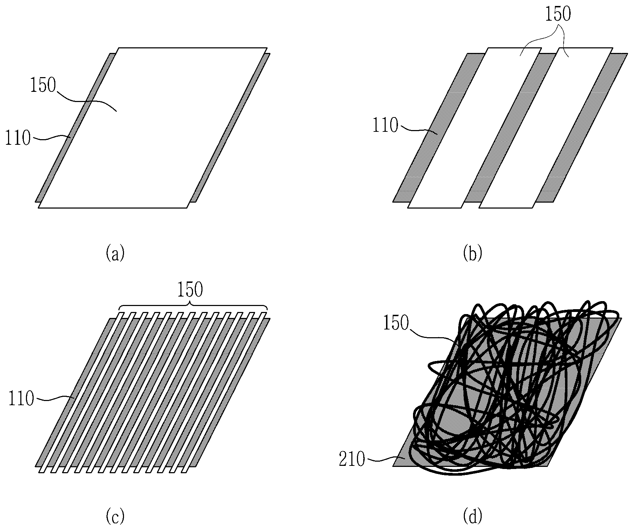

Fig. 5 is a diagram showing a current collector included in the electrode assembly of Fig. 4.

Referring to Figs. 4 and 5, the electrode assembly according to an embodiment of the present disclosure is configured such that the positive electrode current collector 150 is stacked on a surface opposite to the surface where the positive electrode active material layer 110 is in contact with the separator 300. Further, the negative active material layer 210 is configured such that the negative electrode current collector 250 is stacked on a surface opposite to the surface in contact with the separator 300.

Therefore, the electrode assembly according to the present embodiment is stacked without a separate adhesive layer between the positive electrode active material layer 110 and the positive electrode current collector 150, whereby the contact area between the positive electrode active material layer 110 and the positive electrode current collector 150 may increase, the electron movement between the positive electrode active material layer 110 and the positive electrode current collector 150 is not limited, and thus the discharge capacity can also be improved. This may be similarly described for the negative electrode active material layer 210 and the negative electrode current collector 250.

Here, the positive electrode current collector 150 and the negative electrode current collector 250 are not particularly limited as long as they have high conductivity without causing a chemical change in the battery. For example, copper, stainless steel, aluminum, nickel, titanium, calcined carbon, copper or stainless steel having a surface treated with carbon, nickel, titanium, silver, etc., aluminum-cadmium alloy, and the like may be used.

Further, there may be almost no adhesive force between the positive electrode current collector 150 and the positive electrode active material layer 110 or the negative electrode current collector 250 and the negative electrode active material layer 210. Even if there is an adhesive force between the positive electrode current collector 150 and the positive electrode active material layer 110 or the negative electrode current collector 250 and the negative electrode active material layer 210, the adhesive force may be an adhesive force between the current collectors 150 and 250 and the active material layers 110 and 210 themselves.

In this case, the adhesive force between the positive electrode current collector 150 and the positive electrode active material layer 110 or the negative electrode current collector 250 and the negative electrode active material layer 210 may be 0 gf/15 mm or more and 5 gf/15 mm or less. More specifically, the adhesive force between the separator 300 and the positive active material layer 110 or the negative active material layer 210 may be 0.05 gf/15 mm or more and 4.5 gf/15 mm or less. As an example, the adhesive force between the separator 300 and the positive active material layer 110 or the negative active material layer 210 may be 0.1 gf/15 mm or more and 4 gf/15 mm or less.

Therefore, in the electrode assembly of the present embodiment, the adhesive force between the positive electrode current collector 150 and the positive electrode active material layer 110 or the negative electrode current collector 250 and the negative electrode active material layer 210 may have an adhesive strength within the above-mentioned range, and there may be almost no adhesive force between the positive electrode current collector 150 and the positive electrode active material layer 110 or the negative electrode current collector 250 and the negative electrode active material layer 210. That is, a separate adhesive layer is not formed between the positive electrode current collector 150 and the positive electrode active material layer 110 or the negative electrode current collector 250 and the negative electrode active material layer 210, the disturbance of electron movement is also reduced and so the discharge capacity can be improved.

On the other hand, when the adhesive force between the positive electrode current collector 150 and the positive electrode active material layer 110 or the negative electrode current collector 250 and the negative electrode active material layer 210 is too large outside the above-mentioned range, it can be seen that a separate adhesive layer is formed between the positive electrode current collector 150 and the positive electrode active material layer 110 or the negative electrode current collector 250 and the negative electrode active material layer 210. In this case, the adhesive layer located between the positive electrode current collector 150 and the positive electrode active material layer 110 or the negative electrode current collector 250 and the negative active material layer 210 is the positive electrode current collector 150 and the positive electrode active material layer 110 or the negative electrode. It may disturb the movement of electrons between the negative electrode current collector 250 and the negative electrode active material layer 210, and the discharge capacity in the high rate region may also be lowered.

Further, referring to Figs. 4 and 5, in the electrode assembly according to the present embodiment, the positive electrode active material layer 110 and the negative electrode active material layer 210 are adhered to the separator 300, and thus, the positive electrode current collector 150 and the negative electrode current collector 250 are not limited to the film form conventionally used, and can be used in various forms.

Referring to Fig. 5(a), at least one of the positive electrode current collector 150 and the negative electrode current collector 250 may be formed of a planar sheet. As an example, when the positive electrode current collector 150 is formed of a planar sheet, the positive electrode current collector 150 may have a size equal to or smaller than that of one surface of the positive electrode active material layer 110. In addition to this, the positive electrode current collector 150 does not need to serve as a support for the positive electrode active material layer 110, unlike the conventional one, and may have a thinner thickness than the conventional one. This may be similarly described for the negative electrode current collector 250.

Referring to Figs. 5(b) and (c), at least one of the positive electrode current collector 150 and the negative electrode current collector 250 is formed of at least two or more linear sheets, and the linear sheets may be spaced apart from each other. Here, the linear sheet may be formed in various forms, such as a fibrous type, a rod type, and a thin plate type. Further, the linear sheets may have the same pattern as each other. As an example, the pattern may be a curved, straight, or dotted pattern, etc.

Referring to Fig. 5(d), at least one of the positive electrode current collector 150 and the negative electrode current collector 250 may be formed of a fibrous sheet having a random arrangement.

Thereby, the electrode assembly according to the present embodiment may include various types of current collectors 150 and 250 and thus can sufficiently serve as an electron transfer passage while reducing the total area of the current collectors 150 and 250. Further, when assembling the battery cell, the manufacturing form is easy while reducing the total weight, and thus the productivity can be improved. Further, the active material layers 110 and 210 can be contained more than the conventional case, and the discharge capacity can be further increased.

In addition, in the electrode assembly according to the present embodiment, a notching process in which an electrode tab is formed at one end of the current collectors 150 and 250 may proceed together when the current collectors 150 and 250 of the above-mentioned forms are manufactured, so that the productivity can be further improved.

Next, the method of manufacturing an electrode assembly according to another embodiment of the present disclosure will be specifically described.

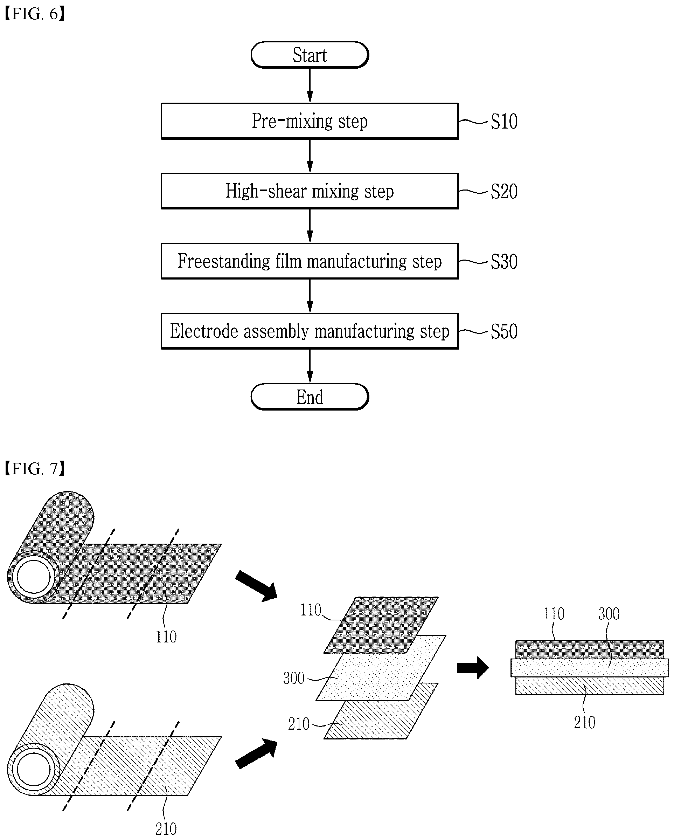

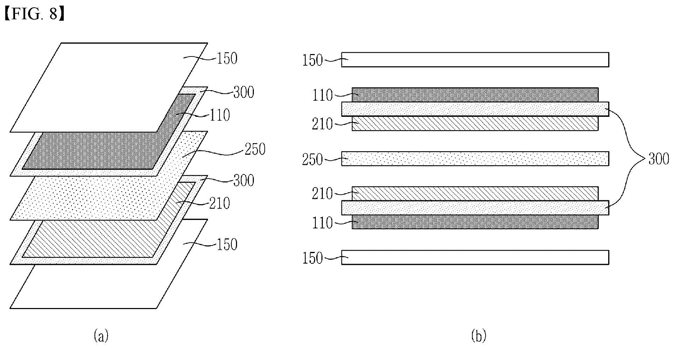

Fig. 6 is a flowchart showing a process of manufacturing the electrode assembly of Fig. 4. Fig. 7 is a diagram showing a manufacturing process of the electrode assembly of Fig. 6. Fig. 8 is an exploded view of the electrode assembly manufactured in the electrode assembly manufacturing process of Fig. 6.

Referring to Fig. 6, the method of manufacturing an electrode assembly according to the present embodiment includes a pre-mixing step (S10) of mixing an active material, a conductive material and a binder, a mixing step (S20) of applying a high shearing force to prepare an electrode composition, a step (S30) of producing a freestanding film using the electrode composition, and a step (S50) of performing a lamination process after adhering a freestanding film onto a separator and then stacking the current collector onto the freestanding film to manufacture an electrode assembly.

More specifically, referring to Figs. 6 and 7, in the electrode assembly manufacturing step (S50), the positive active material layer 110 produced in the freestanding step (S30) is adhered to one surface of the separator 300, and the negative active material layer 210 produced in the freestanding step (S30) is adhered to the other surface of the separator 300. In one example, in a state where the positive electrode active material layer 110 and the negative electrode active material layer 210 are stacked on the upper and lower surfaces of the separator 300, respectively, an electrode assembly having a structure of a positive electrode active material layer 1 10-separator 300-negative electrode active material layer 210 can be formed by bonding with a flat plate press.

Further, referring to Figs. 6 to 8, in the electrode assembly manufacturing step (S50), the positive electrode current collector 150 and the negative electrode current collector 250 can be additionally stacked on the electrode assembly having a structure of the positive electrode active material layer 110 - separator 300 - negative electrode active material layer 210. As an example, at least two of the electrode assemblies are stacked, and the at least two electrode assemblies can be disposed such that the positive electrode active material layer 110 included in each electrode assembly faces each other or the negative electrode active material layer 210 faces each other. Further, in at least two of the electrode assemblies, a positive electrode current collector 150 is stacked between respective positive electrode active material layers 110, and a negative electrode current collector 250 may be stacked between respective negative electrode active material layers 210.

Therefore, the manufacturing method of the electrode assembly according to the present embodiment manufactures the electrode assembly having a structure of the positive electrode active material layer 110-separator 300-negative electrode active material layer 210 and thus can be simplified in the manufacturing process as compared with the conventional process in which the positive electrode and the negative electrode have to be manufactured separately. Further, the electrode assembly having a structure of the positive electrode active material layer 1 10-separator 300-negative electrode active material layer 210 does not include a separate adhesive layer between the positive electrode active material layer 110 and the positive electrode current collector 150 or the negative electrode active material layer 210 and the negative electrode current collector 250, so that the electron movement is not limited, and so the discharge capacity can also be improved.

The battery cell according to another embodiment of the present disclosure may include the above-mentioned electrode assembly. Further, the battery cell according to another embodiment of the present disclosure may include the above-mentioned electrode assembly and the electrolyte.

The electrolyte solution used herein may include organic liquid electrolytes, inorganic liquid electrolytes, solid polymer electrolytes, gel polymer electrolytes, solid inorganic electrolytes, molten inorganic electrolytes, etc. that can be used in the manufacture of lithium secondary batteries, without being limited thereto.

Specifically, the electrolyte solution may contain an organic solvent and a lithium salt. The organic solvent may be used without particular limitation as long as it can function as a medium through which ions involved in the electrochemical reaction of the battery can move. The lithium salt can be used without particular limitation as long as it is a compound capable of providing lithium ions used in a lithium secondary battery.

For the purpose of improving the life characteristics of the battery, suppressing the decrease in battery capacity, and improving the discharge capacity of the battery, the electrolyte solution may include, in addition to the above components, one or more types of additives selected among haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol or aluminum trichloride. At this time, the additive may be contained in an amount of 0.1% by weight to 5% by weight based on the total weight of the electrolyte solution.

Hereinafter, the contents of the present disclosure will be described by way of more specific examples. However, the following examples are for illustrative purposes only, and the scope of the present disclosure is not limited thereto.

### <Example>

In this example, a pre-mixing step of preparing a mixture in which a positive electrode active material, a conductive material, and a binder are dry-mixed using a Waring blender is performed. Here, the positive electrode active material is 94 wt% of lithium manganese oxide (LMO), and the conductive material is 3 wt% of Super C65. Further, the binder contains 3 wt% of polytetrafluoroethylene (PTFE). At this time, the pre-mixing step (S10) is performed at room temperature at 5000 rpm for 1 minute. Then, a mixing step (S20) in which a shearing force is applied to the mixture prepared in the pre-mixing step (S10) to prepare a first electrode composition, is performed using a PBV-0.1L equipment (available from Irie Shokai). At this time, the mixing step (S20) is performed at room temperature at 30 rpm for 5 minutes. Then, the positive active material layer 110 in the form of a freestanding film is produced using the first electrode composition prepared in the mixing step (S20) using a two roll mill MR-3 equipment (available from Inoue MFG). In the case of the negative electrode active material layer 210, it is manufactured by the same method except that a negative electrode active material, which is graphite, is used instead of the positive electrode active material.

Then, PVDF-HFP (Mw. 500,000) resin is added to acetone to prepare a polymer solution (solid content: 5 wt% concentration). Al₂O₃ (Nippon Light Metal, LS235) is added thereto and dispersed by a ball mill method to prepare a slurry for a porous coating layer. The prepared slurry for the porous coating layer is coated on the separator 300 which is a polyolefin (PO) having a thickness of 15 um, by a dip coating method. Here, the thickness of the adhesive layer coated with the slurry for the porous coating layer is 2 um. At this time, the temperature proceeds at a level of 23 degrees Celsius, relative humidity (RH) 40%.

Then, the positive active material layer 110 and the negative active material layer 210 are respectively stacked on the separator 300 coated with the slurry for the porous coating layer, and then roll pressing is performed. Thereby, an electrode assembly having a structure of the positive active material layer 110 - separator 300 - negative active material layer 210 is manufactured.

Then, at least two or more of the electrode assembly are included, the positive electrode current collector 150, which is an aluminum foil of 20 um, is stacked on the positive electrode active material layer 110, the negative electrode current collector 250, which is a copper foil of 20 um, is stacked on the negative electrode active material layer 210, which is then packaged in a pouch together with the electrolyte solution, thereby manufacturing a battery cell. Here, as the electrolyte solution, a 1.0M LiPF₆ solution is used as a mixed solvent of ethylene carbonate (EC)/ethylmethyl carbonate (EMC) (20/80; volume ratio).

### <Comparative Example 1>

It is manufactured in the same manner as in Example except for the following. Comparative Example 1 does not contain a separate adhesive layer in the separator 30, and contains an adhesive layer coated with the adhesive slurry to a thickness of 0.5 um, in which the adhesive layer is obtained by mixing PVDF and carbon between the positive electrode active material layer 11 and the positive electrode current collector 15. The positive electrode active material layer 11 and the positive electrode current collector 15 are roll-pressed to manufacture the positive electrode 10. Further, it contains an adhesive layer coated with an adhesive slurry to a thickness of 0.5 um, in which the adhesive layer is obtained by mixing PVDF and carbon between the negative electrode active material layer 21 and the negative electrode current collector 25. The negative electrode active material layer 21 and the negative electrode current collector 25 are roll-pressed to manufacture the negative electrode 20. Further, a separator 30 is stacked between the positive electrode 10 and the negative electrode 20 to manufacture an electrode assembly having a structure of the positive electrode 10 - separator 30 - negative electrode 20, which is packaged in a pouch together with the electrolyte solution, thereby manufacturing a battery cell.

### <Comparative Example 2>

It is manufactured in the same manner as in Example except for the following. Comparative Example 2 does not contain a separate adhesive layer in the separator 30, and contains an adhesive layer coated with an adhesive slurry to a thickness of 1.5 um, in which the adhesive layer is obtained by mixing PVDF and carbon between the positive electrode active material layer 11 and the positive electrode current collector 15. The positive electrode active material layer 11 and the positive electrode current collector 15 are roll-pressed to manufacture the positive electrode 10. Further, it contains an adhesive layer coated with an adhesive slurry to a thickness of 1.5 um, in which the adhesive layer is obtained by mixing PVDF and carbon between the negative electrode active material layer 21 and the negative electrode current collector 25. The negative electrode active material layer 21 and the negative electrode current collector 25 are roll-pressed to manufacture the negative electrode 20. Further, a separator 30 is stacked between the positive electrode 10 and the negative electrode 20 to manufacture an electrode assembly having a structure of the positive electrode 10 - separator 30 - negative electrode 20, which is packaged in a pouch together with the electrolyte solution, thereby manufacturing the battery cell

### <Experimental Example 1 (Measurement of Adhesive Force)>

The adhesive force between the positive electrode active material layers 11 and 110 and the negative electrode active material layers 21 and 210 in the form of freestanding films produced in Examples, Comparative Examples 1 and 2, respectively, and other substrates was measured. At this time, the adhesive force was sampled with a width of 15 mm, and then measured through the peel strength at a speed of 300 mm/min and an angle of 90 degrees using Instron's UTM equipment. Here, for the measurement of the adhesive force, the adhesive force between the current collector and the active material layer and the adhesive force between the separator and the active material layer were measured, respectively, and the results are shown in Table 1 below.

**[Table 1]**

| | Example | Comparative Example 1 | Comparative Example 2 |
|---|---|---|---|
| Adhesive force between the current collector and the active material layer (gf/15mm) | 0.2 | 5.6 | 12.5 |
| Adhesive force between the separator and the active material layer (gf/15mm) | 74.6 | - | - |

Referring to Table 1, it can be confirmed that when an adhesive layer is formed between the active material layer and the separator as in Examples, an adhesive force between the active material layer and the separator is very good, unlike Comparative Example 1 and Comparative Example 2.

On the other hand, it can be confirmed that when the adhesive layer is formed between the current collector and the active material layer as in Comparative Examples 1 and 2, the adhesive force between the current collector and the active material layer is superior to that of Examples, but it is very low compared to the adhesive force between the separator and the active material layer of Examples. In addition, in the case of Comparative Examples 1 and 2, it can be confirmed that there is no adhesive force between the separator and the active material layer, unlike Examples.

Thereby, although the positive active material layer 110 and the negative active material layer 210 according to the present embodiment are manufactured in the form of a freestanding film in the same manner as in Comparative Examples, the adhesive force between the active material layers 110 and 210 and the separator 300 is very excellent, so that the active material layers 110 and 210 and the separator 300 are stably fixed to each other, and in the charging/discharging process of the battery cell, the stability of the battery cell was improved, and the lifespan can also be extended.

### <Experimental Example 2 (Measurement of Discharge Capacity)>

The battery cells manufactured in Examples and Comparative Examples are respectively charged and discharged under 0.1C/0.1C, 1C/1C, and 2C/2C conditions in a voltage range of 3.0 to 4.3 V, and then the discharge capacity value of the first cycle is calculated. The results are shown in Table 2 below.

**[Table 2]**

| | Example | Comparative Example 1 | Comparative Example 2 |
|---|---|---|---|
| 0.1C initial discharge capacity (mAh/g) | 4.97 | 4.97 | 4.99 |
| 1C discharge capacity (mAh/g) | 4.56 | 4.28 | 4.17 |
| 2C discharge capacity (mAh/g) | 3.72 | 2.99 | 2.21 |

Referring to Table 2, it can be confirmed that Examples exhibit excellent discharge capacity as a whole, unlike Comparative Examples 1 and 2. In particular, it can be confirmed that in Examples, the discharge capacity is improved in the high rate region, unlike Comparative Examples 1 and 2. In addition, it can be confirmed that in the case of Comparative Examples 1 and 2, the adhesive layer located between the current collectors 15 and 25 and the active material layers 11 and 21 includes a mixture of a binder and a conductive material, but it is inferior in the high rate region in that the binder included in the adhesive layer prevents electron movement between the current collectors 15 and 25 and the active material layers 11 and 21. In particular, when comparing Comparative Example 1 and Comparative Example 2, it can be confirmed that as the adhesive layer located between the current collectors 15 and 25 and the active material layers 11 and 21 becomes thicker, the degree of inferiority is larger.

On the contrary, in the case of Examples, it can be confirmed that a separate adhesive layer is not formed between the current collectors 150 and 250 and the active material layers 110 and 210, and thus they are in complete contact with each other, so that the adhesive layer does not disturb the electron movement between the current collectors 150 and 250 and the active material layers 110 and 210, and the discharge capacity is superior to that of Comparative Example even in a high rate region.

Thereby, when the electrode assembly having a structure of the positive active material layer 110 - separator 300 - negative electrode active material layer 210 is included as in Examples, it can be confirmed that the content of the binder contained in the electrode assembly is minimized, the resistance improvement effect is enhanced, the disturbance of electron movement is also reduced so that the discharge capacity is excellent as a whole.

Although the invention has been shown and described above with reference to the preferred embodiments, the scope of the present disclosure is not limited thereto, and numerous other variations and modifications can be devised by those skilled in the art using the principles of the invention defined in the appended claims, which will also fall within the spirit and scope of the present disclosure.

## Claims

1. An electrode assembly comprising:
a separator;
a positive active material layer adhered to a first surface of the separator; and
a negative electrode active material layer adhered to a second surface of the separator,
wherein the positive electrode active material layer is formed of a first electrode composition in which a positive electrode active material, a binder, and a conductive material are dry-mixed, and
wherein the negative electrode active material layer is formed of a second electrode composition in which a negative electrode active material, a binder, and a conductive material are dry-mixed.

2. The electrode assembly according to claim 1, wherein:
the positive active material layer is configured such that a positive electrode current collector is stacked on a surface of the positive active material layer opposite to a surface in contact with the separator, and
the negative active material layer is configured such that a negative electrode current collector is stacked on a surface of the positive active material layer opposite to the surface in contact with the separator.

3. The electrode assembly according to claim 2, wherein:
at least one of the positive electrode current collector and the negative electrode current collector is formed of a planar sheet.

4. The electrode assembly according to claim 2, wherein:
at least one of the positive electrode current collector and the negative electrode current collector is formed of at least two or more linear sheets, and
the linear sheets are spaced apart from each other.

5. The electrode assembly according to claim 4, wherein:
the linear sheets have the same pattern as each other.

6. The electrode assembly according to claim 2, wherein:
at least one of the positive electrode current collector and the negative electrode current collector is formed of a fibrous sheet having a random arrangement.

7. The electrode assembly according to claim 1, wherein:
a content of the binder contained in the first electrode composition is 1% by weight or more and 5% by weight or less based on the total weight of the first electrode composition, and
a content of the binder contained in the second electrode composition is 1% by weight or more and 5% by weight or less based on the total weight of the second electrode composition.

8. The electrode assembly according to claim 7, wherein:
the binder comprises polytetrafluoroethylene (PTFE).

9. The electrode assembly according to claim 1, wherein:
a content of the positive electrode active material contained in the first electrode composition is 90% by weight or more and 98% by weight or less based on the total weight of the first electrode composition.

10. The electrode assembly according to claim 9, wherein:
the positive electrode active material comprises at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).

11. The electrode assembly according to claim 1, wherein:
a content of the negative active material contained in the second electrode composition is 90% by weight or more and 98% by weight or less based on the total weight of the second electrode composition.

12. The electrode assembly according to claim 1, wherein:
the negative active material comprises at least one of lithium metal, lithium alloy, petroleum coke, activated carbon, graphite, silicon, tin, and a metal oxide.

13. The electrode assembly according to claim 1, wherein:
the positive active material layer and the negative active material layer are produced from a freestanding film, respectively.

14. The electrode assembly according to claim 1, wherein:
an adhesive layer is formed between the separator and the positive electrode active material layer, and between the separator and the negative electrode active material layer, respectively, and
the adhesive layer has a porous structure.

15. A battery cell comprising the electrode assembly as set forth in claim 1.

16. The battery cell according to claim 15, wherein:
the battery cell is formed by stacking at least two of the electrode assemblies, and
the at least two electrode assemblies are disposed such that the positive active material layers contained in each electrode assembly faces each other or the negative active material layer faces each other.

17. The battery cell according to claim 16, wherein:
at least two of the electrode assemblies are configured such that a positive electrode current collector is stacked between the respective positive electrode active material layers, and
a negative electrode current collector is stacked between the respective negative electrode active material layers.

18. A method for manufacturing an electrode assembly, the method comprising the steps of:
producing a positive electrode active material layer formed of a first electrode composition in which a positive electrode active material, a conductive material, and a binder are dry-mixed;
producing a negative electrode active material layer formed of a second electrode composition in which a negative electrode active material, a conductive material, and a binder are dry-mixed; and
attaching the positive electrode active material layer to a first surface of the separator, and attaching the negative active material layer to a second surface of the separator.

19. The method for manufacturing an electrode assembly according to claim 18, wherein:
the positive electrode active material layer and the negative electrode active material layer are produced from a freestanding film.

20. The method for manufacturing an electrode assembly according to claim 18,
which further comprises stacking the positive electrode current collector on a surface opposite to a surface in contact with the separator in the positive electrode active material layer, and stacking the negative electrode current collector on a surface opposite to a surface in contact with the separator in the negative electrode active material layer.
